# EUROPEAN PATENT APPLICATION

(11) **EP 4 301 088 A1**
(43) Date of publication of application: **03.01.2024**
(21) Application number: 23180399.0
(22) Date of filing: 20.06.2023
(51) Int. Cl.: H05B 1/02, A24F 40/10, A24F 40/46, H05B 3/18, H05B 3/26

(54) **HEATING ELEMENT, ATOMIZER, AND ELECTRONIC ATOMIZATION DEVICE**

(30) Priority: 24.06.2022 CN 202210725430
(71) Applicant: Shenzhen Smoore Technology Limited, Shenzhen, Guangdong 518102 (CN)
(72) Inventor: LIN, Hao, Shenzhen, Guangdong 518102 (CN); TANG, Junjie, Shenzhen, Guangdong 518102 (CN); WANG, Libo, Shenzhen, Guangdong 518102 (CN); LUO, Hongliang, Shenzhen, Guangdong 518102 (CN); XIAO, Congwen, Shenzhen, Guangdong 518102 (CN)
(74) Representative: Manitz Finsterwald Patent- und Rechtsanwaltspartnerschaft mbB

(57) **Abstract**

The present invention relates to a heating element, an atomizer, and an electronic atomization device. The heating element includes: a porous substrate and a heating film. The heating film includes a first sub-film and a second sub-film stacked together. The first sub-film is located on the surface of the porous substrate and is of a porous structure. The second sub-film is arranged on the side of the first sub-film away from the porous substrate. The second sub-film is of a porous structure, and the porosity of the second sub-film is less than the porosity of the first sub-film; or the second sub-film is of a non-porous structure. The heating element is of low resistance, and can provide a sufficient amount of the aerosol generating substrate during atomization to avoid dry heating.

## Description

### TECHNICAL FIELD

The present invention relates to the field of atomizers, and in particular, to a heating element, an atomizer, and an electronic atomization device.

### BACKGROUND

A heating element includes a porous ceramic substrate and a heating film. The heating film is generally a solid metal film. A liquid aerosol generating substrate can only infiltrate the heating film from the porous ceramic surface adjacent to the heating film. It is difficult for the aerosol generating substrate to completely infiltrate the heating film, and the aerosol generating substrate cannot be supplied in a timely manner during atomization, which easily leads to dry heating, resulting in burnout of the heating film and reduced vapor output. Solution to the foregoing problems in the prior art generally adopt a porous heating film, which uses a metal film of a porous structure to generate heat, enabling the heating film to have a certain liquid guide and liquid storage capacity. However, the porous film leads to high resistance of the heating film, resulting in low practical applicability.

### SUMMARY

Based on this, it is necessary to provide a heating element with low resistance, which can provide a sufficient amount of aerosol generating substrate during atomization to avoid dry heating.

In addition, it is necessary to provide an atomizer and an electronic atomization device including the heating element.

A heating element is provided, including: a porous substrate and a heating film, where the heating film includes a first sub-film and a second sub-film stacked together, the first sub-film is located on the surface of the porous substrate and is of a porous structure; the second sub-film is arranged on the side of the first sub-film away from the porous substrate; the second sub-film is of a porous structure, and the porosity of the second sub-film is less than the porosity of the first sub-film; or the second sub-film is of a non-porous structure.

In an embodiment, the porosity of the first sub-film ranges from 3% to 80%; and/or the average pore size of the first sub-film ranges from 0.1 mm to 5 mm; and/or the thickness of the first sub-film ranges from 40 µm to 1000 µm.

In an embodiment, the second sub-film is of a porous structure, and the porosity of the second sub-film is less than or equal to 20%; and/or the second sub-film is of a porous structure, and the average pore size of the second sub-film ranges from 0.1 mm to 1 mm; and/or the thickness of the second sub-film ranges from 2 µm to 50 µm; and/or the thickness of the second sub-film is less than the thickness of the first sub-film.

In an embodiment, the heating film further includes a third sub-film, the third sub-film is arranged between the first sub-film and the second sub-film and is of a porous structure, the porosity of the first sub-film is greater than or equal to the porosity of the third sub-film, and the porosity of the third sub-film is greater than or equal to the porosity of the second sub-film.

In an embodiment, a plurality of third sub-films are provided; the plurality of third sub-films are stacked in sequence between the first sub-film and the second sub-film, and in a direction gradually away from the porous substrate, the porosity of a previous third sub-film is greater than or equal to the porosity of a next third sub-film next to the previous third sub-film.

In an embodiment, the first sub-film and the second sub-film are each independently a metal film or an alloy film.

In an embodiment, the first sub-film and the second sub-film are each independently selected from one of a nickel film, a titanium film, a nickel-iron alloy film, a nickel-copper alloy film, a nickel-chromium alloy film, and an iron-chromium alloy film.

In an embodiment, the shape of the first sub-film is linear, curved, zigzag, rectangular, grid, or annular; and/or the positive projection of the second sub-film on the first sub-film falls within the first sub-film.

In an embodiment, at least part of pores of the porous substrate are in communication with pores of the first sub-film; and/or the porous substrate is a porous ceramic substrate; and/or,
the porosity of the porous substrate ranges from 25% to 75%; and/or the average pore size of the porous substrate ranges from 5 µm to 40 µm.

In an embodiment, the porous substrate is at least one of porous alumina ceramic, porous silica ceramic, porous silicon carbide ceramic, porous cordierite ceramic, porous mullite ceramic, porous sepiolite ceramic, and porous diatomite ceramic.

An atomizer is provided, including a liquid reservoir and the heating element, where the liquid reservoir is configured to store an aerosol generating substrate, and the heating element is configured to heat and atomize the aerosol generating substrate in the liquid reservoir.

An electronic atomization device is provided, including a power supply component and the atomizer, where the power supply component is configured to supply power to the atomizer.

The heating element includes the porous substrate and the heating film. The porous substrate is configured to guide a liquid aerosol generating substrate, and the heating film is configured to heat and atomize the aerosol generating substrate. The heating film includes the first sub-film and the second sub-film stacked together. The first sub-film is located on the surface of the porous substrate and is of a porous structure, which can adsorb the aerosol generating substrate from the surface of the substrate to the heating film by capillary action, to ensure the sufficient supply of liquid, achieve low-temperature atomization, and avoid dry heating during atomization. In addition, the inventor has found that when the heating film includes only the first sub-film, the resistance of the heating film is high, resulting in low practical applicability. Therefore, the low-porosity or non-porous second sub-film is stacked on the first sub-film, to reduce the resistance while ensuring the sufficient supply of liquid and a good atomization effect, so that the heating element can be practically applied.

### BRIEF DESCRIPTION OF THE DRAWINGS

FIG. 1 is a perspective view of a heating element according to an embodiment;
FIG. 2 is a perspective sectional view of the heating element shown in FIG. 1;
FIG. 3 is a photomicrograph of the heating element shown in FIG. 1.
FIG. 4 is a cross-sectional view of the heating element shown in FIG. 3 after soaking with an aerosol generating substrate;
FIG. 5 is a top view of the heating element shown in FIG. 3 after soaking with an aerosol generating substrate;
FIG. 6 is another schematic view of a heating film in the heating element shown in FIG. 1; and
FIG. 7 is still another schematic view of a heating film in the heating element shown in FIG. 1.

### DETAILED DESCRIPTION

For ease of understanding the present invention, the present invention will be described below in more detail in the Detailed Description section. Preferred embodiments of the present invention are given in the Detailed Description section. However, the present invention may be implemented in various different forms, and is not limited to the embodiments described in this specification. On the contrary, the embodiments are provided for purpose of providing a more comprehensive understanding of the disclosure of the present invention.

Unless otherwise defined, meanings of all technical and scientific terms used in the present invention are the same as those usually understood by a person skilled in the technical field to which the present invention belongs. In the present invention, terms used in the specification of the present invention are merely used for describing objectives of the specific embodiments, but are not intended to limit the present invention.

The term "and/or" used in the present invention includes any or all combinations of one or more associated listed items.

The terms such as "first", "second", and "third" are merely used for purpose of description, and shall not be understood as indicating or implying relative importance or implicitly indicating the number of indicated technical features. Therefore, features defining "first", "second", and "third" can explicitly or implicitly include at least one said feature.

In the descriptions of the present invention, unless explicitly specified, "a plurality of" means at least two, for example, two or three.

When a range of values is disclosed in the specification, the range is considered continuous and includes the minimum and maximum values of the range, and every value between the minimum and maximum values. Further, when the range refers to an integer, every integer between the minimum and maximum values of the range is included. In addition, when a plurality of ranges are provided to describe a feature or characteristic, the ranges can be combined. In other words, unless otherwise indicated, all ranges disclosed herein shall be understood to include any and all sub-ranges thereof.

"Embodiment" mentioned in the specification means that particular features, structures, or characteristics described with reference to the embodiment may be included in at least one embodiment of the present invention. The term appearing at different positions of this specification may not refer to the same embodiment or an independent or alternative embodiment that is mutually exclusive with another embodiment. It can be explicitly or implicitly understood by a person skilled in the art that the embodiments described in the specification may be combined with other embodiments.

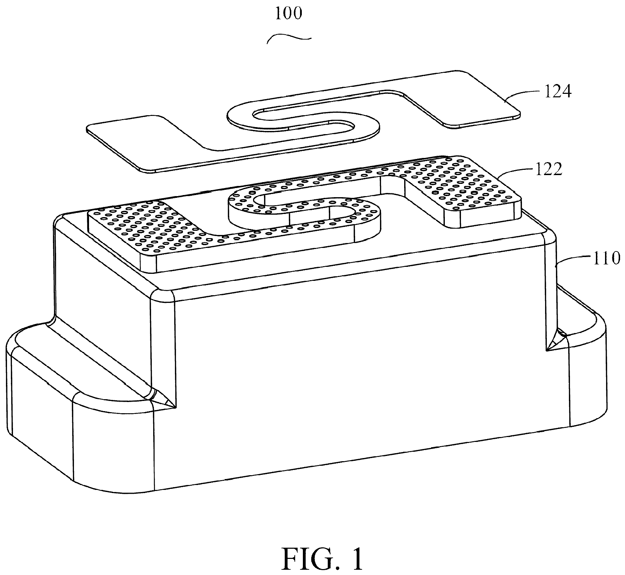

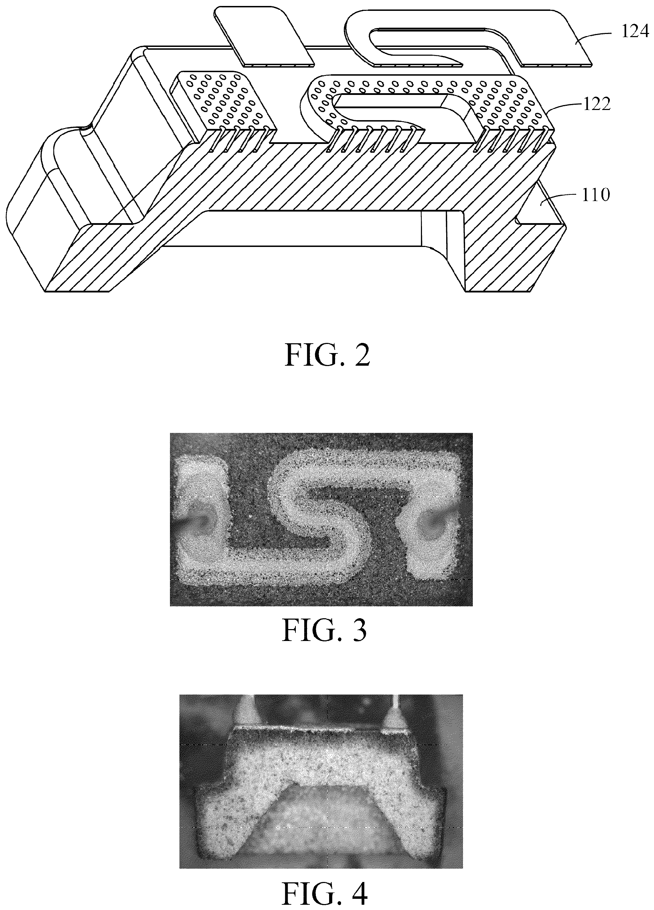

Referring to FIG. 1 and FIG. 2, a first aspect of the present invention provides a heating element 100 of an embodiment, including a porous substrate 110 and a heating film 120. The porous substrate 110 is configured to guide a liquid aerosol generating substrate, and the heating film 120 is configured to heat and atomize the aerosol generating substrate. The heating film 120 is arranged on a surface of the porous substrate 110.

The heating film 120 includes a first sub-film 122 and a second sub-film 124 stacked together. The first sub-film 122 is located on the surface of the porous substrate 110 and is of a porous structure.

The second sub-film 124 is stacked on a side of the first sub-film 122 away from the porous substrate 110. In some embodiments, the second sub-film 124 is of a porous structure, and a porosity of the second sub-film 124 is less than a porosity of the first sub-film 122. In some other embodiments, the first sub-film 122 is of a porous structure, and the second sub-film 124 is of a non-porous structure.

Specifically, the porosity of the first sub-film 122 ranges from 3% to 80%. In a specific example, the porosity of the first sub-film 122 is 3%, 5%, 10%, 15%, 20%, 25%, 30%, 35%, 40%, 45%, 50%, 55%, 60%, 65%, 70%, 75%, 80%, or a range between any two of these values. Further, the porosity of the first sub-film 122 ranges from 5% to 30%.

An average pore size of the first sub-film 122 ranges from 0.1 mm to 5 mm. In a specific example, the average pore size of the first sub-film 122 is 0.1 mm, 0.5 mm, 1 mm, 1.5 mm, 2 mm, 2.5 mm, 3 mm, 3.5 mm, 4 mm, 4.5 mm, 5 mm, or a range between any two of these values. Further, the average pore size of the first sub-film 122 ranges from 0.5 mm to 2 mm.

A thickness of the first sub-film 122 ranges from 40 µm to 1000 µm. In a specific example, the thickness of the first sub-film 122 is 40 µm, 100 µm, 150 µm, 200 µm, 250 µm, 300 µm, 350 µm, 400 µm, 450 µm, 500 µm, 550 µm, 600 µm, 650 µm, 700 µm, 750 µm, 800 µm, 850 µm, 900 µm, 950 µm, 1000 µm, or a range between any two of these values. Further, the thickness of the first sub-film 122 ranges from 60 µm to 400 µm.

Specifically, pores on the first sub-film 122 may be through holes or thick film pores. In some embodiments, the pores on the first sub-film 122 are the through holes, and at least part of the pores on the first sub-film 122 penetrate the first sub-film 122 along a thickness direction of the first sub-film 122. In this case, the first sub-film 122 may be a steel mesh film. In some other embodiments, the pores on the first sub-film 122 may be thick film pores. In this case, the first sub-film 122 may be a screen-printed thick film. It should be understood that, the through holes in the present invention are through holes formed on a metal thin material by laser drilling, etching, stamping, and the like of processes on the metal thin material. The pore size and shape of the through holes are highly consistent. The thick film pores in the present invention are irregular porous structures formed in a thick film. Such structures are irregular porous structures formed in the thick film by adding a certain proportion of a pore-forming agent to a raw material slurry followed by sintering in the process of preparing the thick film.

In some embodiments, the first sub-film 122 has thick film pores. The pore-forming agent used in the preparation of the first sub-film 122 is selected from at least one of starch, carbon powder, ammonium bicarbonate, polymethyl methacrylate (PMMA) microspheres, polystyrene (PS) microspheres, limestone, dolomite, sintered zeolite, perlite, and pumice.

In an embodiment, the first sub-film 122 is a metal film or an alloy film. Specifically, the first sub-film 122 is selected from one of a nickel film, a titanium film, a nickel-iron alloy film, a nickel-copper alloy film, a nickel-chromium alloy film, and an iron-chromium alloy film. In a specific example, the first sub-film 122 is selected from one of a porous nickel film, a porous titanium film, a porous nickel-iron alloy film, a porous nickel-copper alloy film, a porous nickel-chromium alloy film and a porous iron-chromium-aluminum alloy film.

The porosity and the average pore size of the first sub-film 122 are suitable for adsorbing the aerosol generating substrate from the ceramic surface to the heating film 120 by capillary action, so as to ensure the sufficient supply of liquid. In addition, the first sub-film 122 itself may be made of a metal or alloy material with good electrical and thermal conductivity, which can generate or conduct heat to achieve a good atomization effect, thereby avoiding dry heating during atomization.

In some embodiments, the second sub-film 124 is of a porous structure, and a porosity of the second sub-film 124 is less than the porosity of the first sub-film 122. Specifically, the porosity of the second sub-film 124 is less than or equal to 20%. In a specific example, the porosity of the second sub-film 124 is 1%, 5%, 10%, 15%, 20%, or a range between any two of these values.

An average pore size of the second sub-film 124 ranges from 0.1 mm to 1 mm. In a specific example, the average pore size of the second sub-film 124 is 0.1 mm, 0.2 mm, 0.3 mm, 0.4 mm, 0.5 mm, 0.6 mm, 0.7 mm, 0.8 mm, 0.9 mm, 1 mm, or a range between any two of these values.

A thickness of the second sub-film 124 ranges from 2 µm to 50 µm. Further, the thickness of the second sub-film 124 is less than the thickness of the first sub-film 122. In a specific example, the thickness of the second sub-film 124 is 2 µm, 5 µm, 10 µm, 15 µm, 20 µm, 25 µm, 30 µm, 35 µm, 40 µm, 45 µm, 50 µm, or a range between any two of these values.

In an embodiment, the second sub-film 124 has thick film pores. The pore-forming agent used in the preparation of the second sub-film 124 is selected from at least one of starch, carbon powder, ammonium bicarbonate, PMMA microspheres, PS microspheres, limestone, dolomite, sintered zeolite, perlite, and pumice.

In some other embodiments, the second sub-film 124 is of the non-porous structure. That is, the porosity of the second sub-film 124 is 0. When the second sub-film 124 is of the non-porous structure, because the thickness of the second sub-film 124 is very small and the porosity of the first sub-film 122 is high, the aerosol generating substrate can still be well adsorbed from the ceramic surface to the heating film 120 by capillary action, so as to ensure the sufficient supply of liquid, achieve a good atomization effect, and avoid dry heating during atomization.

Specifically, the second sub-film 124 is a metal film or an alloy film. Specifically, the second sub-film 124 is selected from one of a nickel film, a titanium film, a nickel-iron alloy film, a nickel-copper alloy film, a nickel-chromium alloy film, and an iron-chromium alloy film.

It should be understood that, the material of the first sub-film 122 and the material of the second sub-film 124 may be the same or may be different. In addition, the material of the first sub-film 122 and the second sub-film 124 is not limited to metals or alloys, but may also be other materials that can heat and atomize the aerosol generating substrate, for example, conductive ceramic, as long as the porosity, the average pore size, and other parameters of the first sub-film 122 and the second sub-film 124 meet the foregoing requirements.

The arrangement of the low-porosity or non-porous second sub-film 124 can reduce the resistance while ensuring the sufficient supply of liquid and a good atomization effect. Experiments have proved that, when including only the first sub-film 122, the heating film 120 has a resistance ranging from 2 S2 to 3 Ω, and cannot match the use of a battery. When including the first sub-film 122 and the second sub-film 124, the heating film 120 has a resistance ranging from 0.8 S2 to 1.4 Ω, and can meet the usage requirements. In addition, the arrangement of the second sub-film 124 can further reduce liquid explosion. When the heating film 120 includes only the first sub-film 122, the noise created by liquid explosion is 70 dB. When the heating film 120 includes the first sub-film 122 and the second sub-film 124, the noise created by liquid explosion is significantly reduced.

In some embodiments, the porosity of the first sub-film 122 ranges from 3% to 80%, and the average pore size of the first sub-film 122 ranges from 0.1 mm to 5 mm. The porosity of the second sub-film 124 is less than or equal to 20%, and the average pore size of the second sub-film 124 ranges from 0.1 mm to 1 mm. The porosity of the first sub-film 122 is greater than the porosity of the second sub-film 124.

The inventor has found through analysis that, since the first sub-film 122 and the second sub-film 124 have different porosities, they also have different resistance characteristics, thereby achieving a good match between the heating film 120 and the battery. In addition, because the porosity of the first sub-film 122 is greater than the porosity of the second sub-film 124, the amount of liquid stored in the first sub-film 122 is greater than the amount of liquid stored in the second sub-film 124. Therefore, in the atomization process, the second sub-film 124 on the outer side which stores less liquid can quickly heat and atomize the stored liquid under the same heating power, so as to prevent the formation of a thicker liquid film on the surface of the second sub-film 124, thereby preventing the breakage of the thick liquid film during atomization to cause liquid explosion. In addition, because the first sub-film 122 maintains a high porosity, and also has good heat generation and/or heat conduction capacity, thereby ensuring a continuous and reliable liquid supply, and avoiding dry heating caused by lack of liquid during atomization.

Specifically, the porous substrate 110 is a porous ceramic substrate. The porous ceramic is chemically stable, does not chemically react with the aerosol generating substrate, has high-temperature resistance, and therefore does not deform due to an excessively high heating temperature. It may be understood that, the porous substrate 110 is not limited to the porous ceramic, but may also be other porous materials. For example, the porous substrate 110 may also be a porous glass substrate, a porous plastic substrate, a porous metal substrate, or the like.

In an embodiment, the porous substrate 110 is at least one of porous alumina ceramic, porous silica ceramic, porous silicon carbide ceramic, porous cordierite ceramic, porous mullite ceramic, porous sepiolite ceramic, and porous diatomite ceramic.

Further, at least part of pores of the porous substrate 110 are in communication with the pores of the first sub-film 122. By such an arrangement, the aerosol generating substrate can be well guided to the first sub-film 122.

Specifically, the porosity of porous substrate 110 ranges from 25% to 75%. In a specific example, the porosity of the porous substrate 110 is 25%, 30%, 35%, 40%, 45%, 50%, 55%, 60%, 65%, 70%, 75%, or a range between any two of these values. The porosity of porous substrate 110 may also be adjusted based on the composition of the aerosol generating substrate. For example, when the viscosity of the aerosol generating substrate is large, a higher porosity is selected to ensure a good liquid guide effect.

The average pore size of the porous substrate 110 ranges from 5 µm to 40 µm. In a specific example, the average pore size of the porous substrate 110 is 5 µm, 10 µm, 15 µm, 20 µm, 25 µm, 30 µm, 35 µm, 40 µm, or a range between any two of these values.

The porous substrate 110 of the foregoing pore size and porosity provides a uniform liquid guide effect and a good atomization effect.

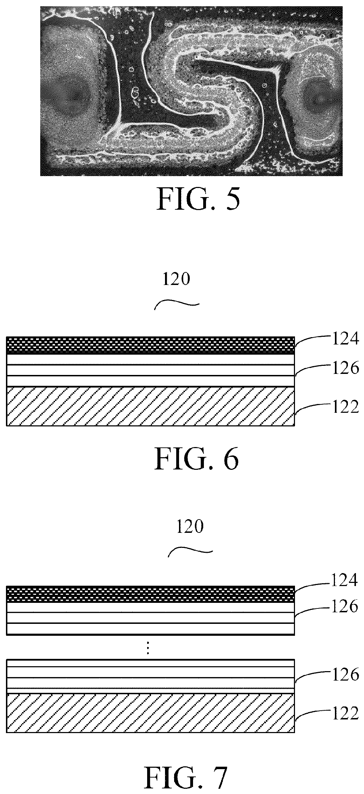

Referring to FIG. 3, FIG. 3 is a photomicrograph of the heating element 100 shown in FIG. 1. FIG. 4 is a cross-sectional view of the heating element 100 shown in FIG. 3 after soaking with the aerosol generating substrate. FIG. 5 is a top view of the heating element 100 shown in FIG. 3 after soaking with the aerosol generating substrate.

The foregoing figures only show one schematic diagram of the heating element 100. In the figure, the shapes of the first sub-film 122 and the second sub-film 124 in the heating film 120 are both curved. It should be understood that, in some other embodiments, the shapes of the first sub-film 122 and the second sub-film 124 are not limited to being curved, but may also be linear, zigzag, rectangular, grid, or annular. The specific shape may be adjusted depending on actual requirements.

In some embodiments, an orthographic projection of the second sub-film 124 on the first sub-film 122 falls within the first sub-film 122. For example, in a specific example, the second sub-film 124 has exactly the same shape as the first sub-film 122, and the second sub-film 124 completely covers the first sub-film 122.

In another specific embodiment, the area of the second sub-film 124 is less than the area of the first sub-film 122, and the second sub-film 124 partially covers the first sub-film 122. Specifically, the second sub-film 124 may be located in the center of the first sub-film 122. When the first sub-film 124 is located in the center of the first sub-film 122, a uniform and reliable liquid supply can be provided, so as to avoid dry heating. Meanwhile, the resistance is well improved to make the resistance uniform and highly consistent, so as to avoid breakage and failure under thermal shock caused by partial inconsistent resistance due to excessively high local resistance during use. In addition, because the resistivity of the second sub-film 124 is low, the current density of the second sub-film 124 is high, and more heat is generated, the second sub-film 124 located in the center can dissipate heat evenly through the first sub-film 122, making the heat generation or thermal field distribution more uniform, and avoiding dry heating due to local high temperature. Furthermore, the first sub-film 122 can also provide a function of preheating the aerosol generating substrate.

When the second sub-film 124 is not located in the center of the first sub-film 122, the position of the second sub-film 124 can be flexibly arranged based on the heating circuit, and the amounts of heat generated in different areas or the thermal field distribution can be adjusted depending on specific requirements. Therefore, the above effect can be achieved by adjusting the position of the second sub-film 124 without needing to adjust the position of the first sub-film 122

As shown in FIG. 3 and FIG. 5, in this embodiment, the area of the second sub-film 124 is less than the area of the first sub-film 122, and the second sub-film 124 partially covers the first sub-film 122. After soaking with the aerosol generating substrate, the thickness of the liquid film on the surface of the heating film 120 is less than the thickness of the liquid film at other positions. That is, the aerosol generating substrate forms a liquid film with a thickness gradient on the atomization surface of the heating element 100. The liquid film with the thickness gradient can achieve a good atomization effect and reduce liquid explosion.

In an embodiment, preparation steps of the heating element 100 are as follows: The porous substrate 110 is screen-printed with the first sub-film 122 and the second sub-film 124, and then vacuum sintered.

Specifically, a layer of the first sub-film 122 is screen-printed on the porous substrate 110 by screen printing first, and the second sub-film 124 is printed on the first sub-film 122. The line width of the second sub-film 124 is less than or equal to the line width of the first sub-film 122. In a specific example, the line width of the first sub-film 122 ranges from 0.2 mm to 1 mm. The line width of the second sub-film 124 ranges from 0.2 mm to 1 mm. It may be understood that only one example of the line widths of the first sub-film 122 and the second sub-film 124 is listed above. However, the line widths of the first sub-film 122 and the second sub-film 124 are not limited thereto, and may be adjusted depending on actual situations.

Referring to FIG. 6, in some embodiments, the heating film 120 further includes a third sub-film 126. The third sub-film 126 is arranged between the first sub-film 122 and the second sub-film 124, and is of a porous structure. The porosity of the first sub-film 122 is greater than or equal to the porosity of the third sub-film 126, and the porosity of the third sub-film 126 is greater than or equal to the porosity of the second sub-film 124.

For example, in a specific example, the porosity of the third sub-film 126 is the same as the porosity of the first sub-film 122. In another specific example, the porosity of the third sub-film 126 is the same as the porosity of the second sub-film 124. In another specific example, the porosity of the third sub-film 126 is between the porosity of the first sub-film 122 and the porosity of the second sub-film 124.

Further, referring to FIG. 7, the heating film 120 further includes a plurality of third sub-films 126. The plurality of third sub-films 126 are stacked in sequence between the first sub-film 122 and the second sub-film 124. In a direction away from the porous substrate 110, the porosity of a previous third sub-film 126 is greater than or equal to the porosity of a next third sub-film 126 next to the previous third sub-film 126. Specifically, in FIG. 7, the direction away from the porous substrate 110 refers to the direction from the bottom to the top.

For example, there are two, three, four, or more third sub-films 126. The plurality of third sub-films 126 may have the same or different porosities, but in the direction away from the porous substrate 110, the porosities of the plurality of third sub-films 126 decrease or remain unchanged. In a specific example, there are two third sub-films 126, and in the direction away from the porous substrate 110, the porosities of the two third sub-films 126 decrease. In another specific example, there are two third sub-films 126, and the porosities of the two third sub-films 126 are the same, and are equal to the porosity of the first sub-film 122 or the porosity of the second sub-film 124 or between the porosity of the first sub-film 122 and the porosity of the second sub-film 124. It should be understood that when there are three, four or more third sub-films 126, the porosities of these third sub-film 126 may be set with reference to the above settings.

Specifically, the third sub-film 126 is a metal film or an alloy film. Specifically, the third sub-film 126 is selected from one of a nickel film, a titanium film, a nickel-iron alloy film, a nickel-copper alloy film, a nickel-chromium alloy film, and an iron-chromium alloy film. In a specific example, the third sub-film 126 is selected from one of a porous nickel film, a porous titanium film, a porous nickel-iron alloy film, a porous nickel-copper alloy film, a porous nickel-chromium alloy film and a porous iron-chromium-aluminum alloy film.

In some embodiments, the third sub-film 126 has the thick film pores. The pore-forming agent used in the preparation of the third sub-film 126 is selected from at least one of starch, carbon powder, ammonium bicarbonate, PMMA microspheres, PS microspheres, limestone, dolomite, sintered zeolite, perlite, and pumice.

It should also be understood that, the material of the third sub-film 126 may be the same as or different from the material of the first sub-film 122 and the second sub-film 124. In addition, the material of the third sub-film 126 is not limited to metals or alloys, but may also be other materials that can heat and atomize the aerosol generating substrate, for example, conductive ceramic, as long as the porosity of the third sub-film 126 meets the foregoing requirements.

The arrangement of the third sub-film 126 between the first sub-film 122 and the second sub-film 124 can guide the aerosol generating substrate to the heating film 120 by capillary action while increasing the thickness of the heating film 120, to avoid dry heating, thereby withstanding a high-power battery.

When the heating film 120 further includes the third sub-film 126, the orthographic projection of the third sub-film 126 on the first sub-film 122 falls within the first sub-film 122, and the orthographic projection of the second sub-film 124 on the third sub-film 126 falls within the third sub-film 126.

In this case, the preparation steps of the heating element 100 are as follows: The porous substrate 110 is screen-printed sequentially with the first sub-film 122, the third sub-film 126 and the second sub-film 124, and then vacuum sintered.

Specifically, first, a layer of the first sub-film 122 is printed on the porous substrate 110 by screen printing. The third sub-film 126 is printed on the first sub-film 122. The line width of the third sub-film 126 is less than or equal to the line width of the first sub-film 122. The second sub-film 124 is printed on the third sub-film 126. The line width of the second sub-film 124 is less than or equal to the line width of the third sub-film 126. In a specific example, the line width of the first sub-film 122 ranges from 0.2 mm to 1 mm. The line width of the third sub-film 126 ranges from 0.2 mm to 1 mm. The line width of the second sub-film 124 ranges from 0.2 mm to 1 mm. It may be understood that only one example of the line widths of the first sub-film 122, the third sub-film 126 and the second sub-film 124 is listed above. However, the line widths of the first sub-film 122, the third sub-film 126, and the second sub-film 124 are not limited thereto, and may be adjusted depending on actual situations.

When there are a plurality of third sub-films 126, in the direction away from the porous substrate 110, the orthographic projection of a next third sub-film 126 on the previous third sub-film 126 falls within the previous third sub-film 126. The orthographic projection of the second sub-film 124 on the last third sub-film 126 falls within the last third sub-film 126.

The heating element 100 of this embodiment has at least the following advantages:
(1) The heating element 100 includes the porous substrate 110 and the heating film 120. The porous substrate 110 is configured to guide the aerosol generating substrate, and the heating film 120 is configured to heat and atomize the aerosol generating substrate. The heating film 120 includes the first sub-film 122 and the second sub-film 124 stacked together. The first sub-film 122 is located on the surface of the porous substrate 110. The first sub-film 122 can better adsorb the aerosol generating substrate from the ceramic surface to the heating film 120 by capillary action, to ensure the sufficient supply of liquid, achieve low-temperature atomization, and avoid dry heating during atomization. In addition, the inventor has found that when the heating film 120 includes only the first sub-film 122, the resistance of the heating film 120 is high, resulting in low practical applicability. Therefore, the low-porosity or non-porous second sub-film 124 is stacked on the first sub-film 122, to reduce the resistance while ensuring the sufficient supply of liquid and a good atomization effect, so that the heating element 100 can be practically applied.
(2) The second sub-film 124 in the heating element 100 can also reduce liquid explosion. Experiments have proved that, when the heating film 120 includes only the first sub-film 122, the noise created by the liquid explosion is 70 dB; and when the heating film 120 includes the first sub-film 122 and the second sub-film 124, the noise created by the liquid explosion is significantly reduced.
(3) The heating film 120 of the heating element 100 may further include at least one third sub-film 126, which can guide the aerosol generating substrate to the heating film 120 by capillary action while increasing the thickness of the heating film 120, to avoid dry heating, thereby withstanding a high-power battery.

A second aspect of the present invention further provides an atomizer of an embodiment. The atomizer includes a liquid reservoir and a heating element. The liquid reservoir is configured to store an aerosol generating substrate. The heating element is configured to heat and atomize the aerosol generating substrate in the liquid reservoir. The heating element is the heating element of the foregoing embodiments, and the details will not be repeated herein.

The atomizer may be specifically configured to atomize the aerosol generating substrate and generate an aerosol for use in different fields, such as medical treatment or electronic aerosol generation devices. In an embodiment, the atomizer may be used in an electronic aerosol generation device to atomize the aerosol generating substrate and generate an aerosol for a user to inhale. For example, the atomizer may be used in an e-cigarette. It may be understood that, in some other embodiments, the atomizer is not limited thereto, and may also be used in medical equipment for treating diseases of upper and lower respiratory systems to atomize medical drugs or the like.

The atomizer ensures the sufficient supply of liquid during atomization, achieves low-temperature atomization, and avoid dry heating during atomization.

A third aspect of the present invention further provides an electronic atomization device of an embodiment. The electronic atomization device includes a power supply component and an atomizer. The power supply component is configured to supply power to the atomizer. The atomizer is the atomizer of the foregoing embodiments, and the details will not be repeated herein. In a specific example, the power supply component may include a battery and a controller. The battery is configured to supply power to the atomizer. The controller is configured to control operation of the atomizer.

In an embodiment, the electronic atomization device may be an e-cigarette.

The electronic atomization device ensures the sufficient supply of liquid during atomization, achieves low-temperature atomization, and avoid dry heating during atomization.

To make the objectives and advantages of the present invention clearer, the heating element of the present invention and its effects will be described below in further detail through specific embodiments. It should be understood that the specific embodiments described herein are only used for explaining the present invention, and are not be intended to limit the present invention.

### Embodiment 1

This embodiment provides a heating element. The heating element includes a porous substrate and a heating film. The porous substrate is porous cordierite ceramic. The porous substrate has an average pore size ranging from 8 µm to 15 µm, a porosity of 50%, and a thickness of 4 mm. The heating film includes a first sub-film and a second sub-film stacked together. The first sub-film is located on the surface of the porous substrate, is made of a nickel-iron alloy film, and has an average pore size of 1 mm, a porosity of 35%, and a thickness of 500 µm. The second sub-film is arranged on the side of the first sub-film away from the porous substrate, is made of a nickel-iron alloy film, and has an average pore size of 0.2 mm, a porosity of 22%, and a thickness of 30 µm. In this embodiment, the first sub-film and the second sub-film are silk screen thick films. In addition, the porous structures of the first sub-film and the second sub-film are thick film pores.

### Embodiment 2

This embodiment provides a heating element. The heating element includes a porous substrate and a heating film. The porous substrate is porous silica ceramic, and has an average pore size ranging from 20 µm to 25 µm, a porosity of 60%, and a thickness of 3 mm. The heating film includes a first sub-film and a second sub-film stacked together. The first sub-film is located on the surface of the porous substrate, made of a nickel-chromium alloy film, and has an average pore size of 0.5 mm, a porosity of 20%, and a thickness of 150 µm. The second sub-film is arranged on the side of the first sub-film away from the porous substrate, made of a nickel-chromium alloy film, and has an average pore size of 0.2 mm, a porosity of 10%, and a thickness of 10 µm. In this embodiment, pores of the first sub-film all run through the first sub-film along a thickness direction of the first sub-film. The first sub-film is made of a dense metal thin material, on which the pores may be prepared by laser, etching, stamping, and the like. The porous structures of the second sub-film are thick film pores. The second sub-film is prepared on the surface of the first sub-film by silkscreen printing.

### Embodiment 3

This embodiment provides a heating element, which is similar to the structure of the heating element of Embodiment 1 except that the heating film further includes a third sub-film. The third sub-film is arranged between the first sub-film and the second sub-film. The third sub-film is made of iron chromium aluminum, and has an average pore size of 0.1 mm, a porosity of 2%, and a thickness of 5 µm.

### Embodiment 4

This embodiment provides a heating element, which is similar to the structure of the heating element of Embodiment 1 except that the second sub-film is of a non-porous structure.

### Embodiment 5

This embodiment provides a heating element, which is similar to the structure of the heating element of Embodiment 1 except that the porosity of the second sub-film is 5%.

### Comparative Example 1

Comparative Example 1 provides a heating element. The heating element includes a porous substrate and a heating film. The porous substrate is porous silica ceramic, and has an average pore size of 15 µm, a porosity of 60%, and a thickness of 4 mm. The heating film is a non-porous nickel-chromium metal film, having a thickness of 500 µm.

### Comparative Example 2

Comparative Example 2 provides a heating element, which is similar to the structure of the heating element of Embodiment 1 except that the heating film includes only the first sub-film, not the second sub-film.

The heating elements of the foregoing embodiments and comparative examples were tested, and test data shown in Table 1 below was obtained. Dry heating test refers to a quantity of vapes where dry heating occurs during vaping by a machine after a ceramic atomization core is assembled into a cartridge.

**Table 1 Test data of embodiments and comparative examples**

| | Dry heating test | Resistance/Ω | Noise of liquid explosion/dB |
|---|---|---|---|
| Embodiment 1 | 1200-1500 | 1.4-1.8 | 60-65 |
| Embodiment 2 | 1000-1200 | 1.0-1.4 | 55-60 |
| Embodiment 3 | 1000-1200 | 0.8-1.2 | 40-45 |
| Embodiment 4 | 800-1000 | 0.8-1.2 | 40-45 |
| Embodiment 5 | 800-1000 | 1.0-1.4 | 50-55 |
| Comparative Example 1 | 200-300 | 0.8-1.2 | 40-45 |
| Comparative Example 2 | 1200-1500 | 1.8-2.4 | 85-95 |
| Comparative Example 3 | 400-600 | 1.4-1.8 | 60-65 |

## Claims

1. A heating element (100), comprising:
a porous substrate (110); and
a heating film (120) comprising a first sub-film (122) and a second sub-film (124) stacked together, the first sub-film (122) being located on a surface of the porous substrate (110) and being of a porous structure, the second sub-film (124) being arranged on a side of the first sub-film (122) away from the porous substrate (110);
wherein the second sub-film (124) is of a porous structure, and a porosity of the second sub-film (124) is less than a porosity of the first sub-film (122); or wherein the second sub-film (124) is of a non-porous structure.

2. The heating element (100) according to claim 1, wherein the porosity of the first sub-film (122) ranges from 3% to 80%; and/or,
the average pore size of the first sub-film (122) ranges from 0.1 mm to 5 mm; and/or
a thickness of the first sub-film (122) ranges from 40 µm to 1000 µm.

3. The heating element (100) according to claim 1, wherein the second sub-film (124) is of a porous structure, and the porosity of the second sub-film (124) is less than or equal to 20%; and/or
the second sub-film (124) is of a porous structure, and an average pore size of the second sub-film (124) ranges from 0.1 mm to 1 mm; and/or
a thickness of the second sub-film (124) ranges from 2 µm to 50 µm; and/or
a thickness of the second sub-film (124) is less than a thickness of the first sub-film (122).

4. The heating element (100) according to any one of claims 1 to 3, wherein the heating film (120) further comprises a third sub-film (126), the third sub-film (126) is arranged between the first sub-film (122) and the second sub-film (124) and is of a porous structure, the porosity of the first sub-film (122) is greater than or equal to a porosity of the third sub-film (126), and the porosity of the third sub-film (126) is greater than or equal to the porosity of the second sub-film (124).

5. The heating element (100) according to any one of claims 1 to 3, wherein the heating film (120) further comprises a plurality of third sub-films (126), the plurality of third sub-films (126) are stacked in sequence between the first sub-film (122) and the second sub-film (124), each third sub-film (126) is of a porous structure, and in a direction away from the porous substrate (110), a porosity of a previous third sub-film of the plurality of third sub-films (126) is greater than or equal to a porosity of a next third sub-film of the plurality of third sub-films (126) next to the previous third sub-film.

6. The heating element (100) according to any one of claims 1 to 5, wherein the first sub-film (122) or the second sub-film (124) is a metal film or an alloy film.

7. The heating element (100) according to claim 6, wherein the first sub-film (122) and the second sub-film (124) are each independently selected from one of a nickel film, a titanium film, a nickel-iron alloy film, a nickel-copper alloy film, a nickel-chromium alloy film, and an iron-chromium alloy film.

8. The heating element (100) according to any one of claims 1 to 7, wherein a shape of the first sub-film (122) is linear, curved, zigzag, rectangular, grid, or annular.

9. The heating element (100) according to any one of claims 1 to 8, wherein an orthographic projection of the second sub-film (124) on the first sub-film (122) falls within the first sub-film (122).

10. The heating element (100) according to any one of claims 1 to 9, wherein at least part of pores of the porous substrate (110) are in communication with pores of the first sub-film (122); and/or
the porous substrate (110) is a porous ceramic substrate.

11. The heating element (100) according to any one of claims 1 to 10, wherein a porosity of the porous substrate (110) ranges from 25% to 75%.

12. The heating element (100) according to any one of claims 1 to 11, wherein an average pore size of the porous substrate (110) ranges from 5 µm to 40 µm.

13. The heating element (100) according to any one of claims 1 to 12, wherein the porous substrate (110) is at least one of porous alumina ceramic, porous silica ceramic, porous silicon carbide ceramic, porous cordierite ceramic, porous mullite ceramic, porous sepiolite ceramic, and porous diatomite ceramic.

14. An atomizer, comprising a liquid reservoir and the heating element (100) according to any one of claims 1 to 13, wherein the liquid reservoir is configured to store an aerosol generating substrate, and the heating element (100) is configured to heat and atomize the aerosol generating substrate in the liquid reservoir.

15. An electronic atomization device, comprising a power supply component and the atomizer according to claim 14, wherein the power supply component is configured to supply power to the atomizer.
